# EUROPEAN PATENT APPLICATION

(11) **EP 3 078 484 A1**
(43) Date of publication of application: **12.10.2016**
(21) Application number: 16159190.4
(22) Date of filing: 08.03.2016
(51) Int. Cl.: B30B 15/00, B05B 5/043, B05B 15/04

(54) **SPRAY DEVICE AND COMPRESSION MOLDING MACHINE INCLUDING THE SAME**

(30) Priority: 06.04.2015 JP 2015078069
(71) Applicant: Kikusui Seisakusho Ltd., Nakagyo-ku Kyoto-shi Kyoto 604-8483 (JP)
(72) Inventor: KAKITANI, Tomohiro, Kyoto-shi, Kyoto 604-8483 (JP)
(74) Representative: TBK

(57) **Abstract**

The invention provides a spray device including an upper punch spray nozzle (814) configured to spray a spray agent to a lower end surface of an upper punch, a lower punch spray nozzle (824) configured to spray a spray agent to an upper end surface of a lower punch and an inner peripheral surface of a die bore, a first suction port (831) configured to suck the sprayed spray agent, and a guide member (84) configured to guide the spray agent sprayed from the upper punch spray nozzle (814) to the first suction port (831), and the guide member (84) is configured to be located above the upper punch spray nozzle (814).

## Description

### Field of the Invention

The invention relates to a compression molding machine configured to compress a powdery material to mold a pharmaceutical tablet, a food product, an electronic component, or the like.

### Background of the Invention

When compression molding a powdery material to produce a molded product, the powdery material is typically mixed with a lubricant (internal lubricant) in order to improve mold releasability of the molded product from a mold tool (a punch and a die).

According to an alternative method, a lubricant (external lubricant) is sprayed to a mold tool before a die bore is filled with a powdery material, and the powdery material is compression molded to produce a molded product. This method is effective also in the production of an orally disintegrating tablet.

The invention disclosed in JP 2006-334515 A relates to a powder lubricant spray device configured to spray a powder lubricant (external lubricant) to a mold tool. According to this invention, a spray member 25 is rotated to spray the powder lubricant to the mold tool.

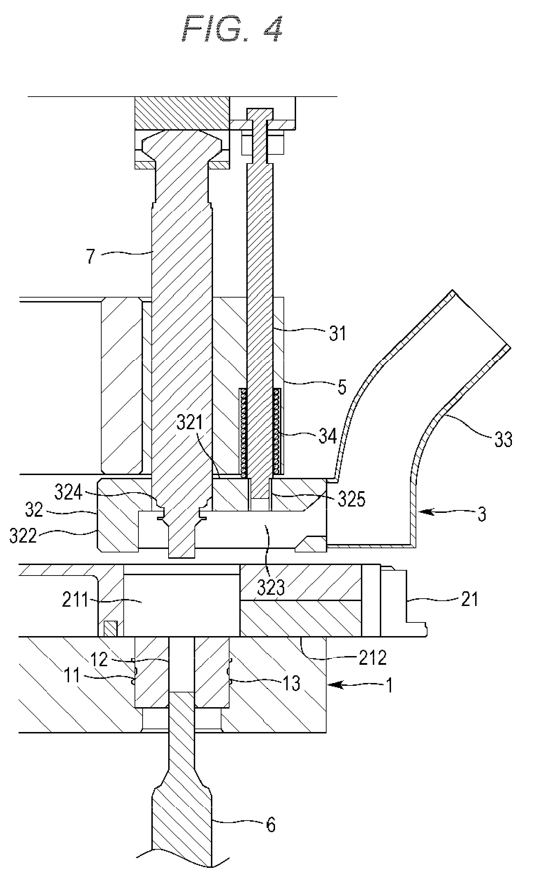

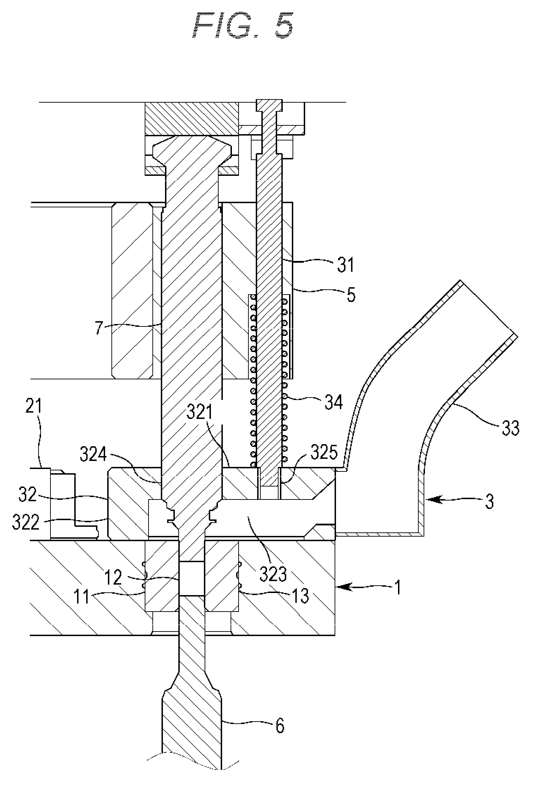

However, the invention disclosed in JP 2006-334515 A is applicable only to a rotary compression molding machine and is not applicable to a single stroke compression molding machine because a spray device 2 is fixed by an attachment member 14 so as to be immovable, as shown in Figs. 4 and 5.

### Summary of the Invention

It is an objective of the invention to provide a spray device applicable to a single stroke compression molding machine.

The invention provides a spray device applicable to a compression molding machine including a die table having a vertically penetrating die bore, a lower punch having an upper end that is inserted to the die bore and is slidable therein, and an upper punch having a lower end that is inserted to the die bore and is slidable therein, the spray device configured to reciprocate on the die table and including: an upper punch spray nozzle configured to spray a spray agent to a lower end surface of the upper punch; a lower punch spray nozzle configured to spray a spray agent to an upper end surface of the lower punch and an inner peripheral surface of the die bore; a first suction port configured to suck the sprayed spray agent; and a guide member configured to guide the spray agent sprayed from the upper punch spray nozzle to the first suction port; wherein the guide member is configured to be located above the upper punch spray nozzle.

The spray device thus configured is applicable to a single stroke compression molding machine. Provision of the guide member prevents the spray agent from being excessively sprayed to the lower end surface of the upper punch. Examples of the spray agent sprayed by the spray device include a lubricant (external lubricant), as well as various agents such as a partitioning agent, a binding agent, and a dividing agent.

A powdery material refers to an aggregate of minute solids and conceptually includes what is called granules and powder smaller than particles. The powdery material can also include a lubricant (internal lubricant).

The lower and upper punches are preferred to be mold tools applicable to a rotary compression molding machine (particularly conform to the TSM Standards or the EU Standards). Such lower and upper punches almost achieve the state of use in a rotary compression molding machine.

The upper punch spray nozzle preferably reciprocates relatively to the guide member. Specifically, the upper punch spray nozzle preferably reciprocates between a predetermined position below the upper punch and a retreating position below the guide member.

When the upper punch spray nozzle thus configured is located at the retreating position, the spray agent sprayed from the upper punch spray nozzle is guided by the guide member and sucked through the first suction port. Accordingly, the spray agent is not sprayed toward a point other than a required point.

The invention also provides a spray device applicable to a compression molding machine including a die table having a vertically penetrating die bore, a lower punch having an upper end that is inserted to the die bore and is slidable therein, and an upper punch having a lower end that is inserted to the die bore and is slidable therein, the spray device configured to reciprocate on the die table and including: an upper punch spray nozzle configured to spray a spray agent to a lower end surface of the upper punch; a lower punch spray nozzle configured to spray a spray agent to an upper end surface of the lower punch and an inner peripheral surface of the die bore; a first suction port configured to suck the sprayed spray agent; and a guide member configured to guide the spray agent sprayed from the upper punch spray nozzle to the suction port; wherein the upper punch spray nozzle reciprocates between a predetermined position below the upper punch and a retreating position below the guide member.

The spray device thus configured is applicable to a rotary compression molding machine as well as to a single stroke compression molding machine. When the upper punch spray nozzle is located at the retreating position, the spray agent sprayed from the upper punch spray nozzle is guided by the guide member and sucked through the first suction port. The spray agent sprayed toward a point other than a required point can thus be sucked.

The invention further provides a spray device applicable to a compression molding machine including a die table having a vertically penetrating die bore, a lower punch having an upper end that is inserted to the die bore and is slidable therein, and an upper punch having a lower end that is inserted to the die bore and is slidable therein, the spray device including a spray nozzle configured to spray a spray agent and configured to reciprocate on the die table, the spray device further including: a first suction port configured to suck the sprayed spray agent; a guide member configured to guide the spray agent sprayed to a lower end surface of the upper punch to the first suction port; a lower punch spray nozzle configured to spray a spray agent to an upper end surface of the lower punch and an inner peripheral surface of the die bore; and an upper punch spray nozzle configured to spray an external lubricant to the lower end surface of the upper punch and reciprocate between a predetermined position below the upper punch and a retreating position below the guide member.

The spray device thus configured is applicable to a rotary compression molding machine as well as to a single stroke compression molding machine. When the upper punch spray nozzle is located at the retreating position, the spray agent sprayed from the upper punch spray nozzle is guided by the guide member and sucked through the first suction port. The spray agent sprayed toward a point other than a required point can thus be sucked.

The spray device preferably has, at a bottom surface, a suction space used for suction of a spray agent sprayed from the lower punch spray nozzle onto the die table. The spray device thus configured can suck the spray agent sprayed onto the die table.

The spray device preferably includes a second suction port configured to suck the spray agent sprayed from the upper punch spray nozzle when the spray device is located at the retreating position and the upper punch spray nozzle is located at the predetermined position. The spray device thus configured can suck the spray agent sprayed toward a point other than a required point even when the upper punch spray portion (upper punch spray nozzle) moves to the predetermined position before the spray device moves to an upper punch spray position.

A compression molding machine includes a die table having a vertically penetrating die bore; a lower punch having an upper end that is inserted to the die bore and is slidable therein, and an upper punch having a lower end that is inserted to the die bore and is slidable therein. Preferably, the compression molding machine further includes the spray device described above. The compression molding machine thus configured can produce, using the spray device, a molded product that is compression molded by the upper punch and the lower punch.

### Effect of the invention

The spray device according to the invention is applicable to a single stroke compression molding machine.

### Brief description of the drawings

Fig. 1 is a perspective view of a compression molding machine according to an embodiment of the invention.
Fig. 2 is a sectional side view taken along line X4-X4, of a principal part of the compression molding machine.
Fig. 3 is an enlarged sectional side view taken along line X5-X5, of the principal part of the compression molding machine.
Fig. 4 is an enlarged sectional side view taken along line X5-X5, of the principal part of the compression molding machine.
Fig. 5 is an enlarged sectional side view taken along line X5-X5, of the principal part of the compression molding machine.
Fig. 6 is a perspective view of a spray device according to an embodiment of the invention (when spraying toward an upper punch).
Fig. 7 is a plan view of the spray device (when spraying toward a lower punch).
Fig. 8 is a perspective view of the spray device (when spraying toward the upper punch).
Fig. 9 is a sectional side view of a principal part of a compression molding machine according to an embodiment of the invention, including a sectional view taken along line X1-X1, of the spray device.
Fig. 10 is a sectional side view of the principal part of the compression molding machine according to the embodiment of the invention, including a sectional view taken along line X1-X1, of the spray device.
Fig. 11 is a sectional side view of the principal part of the compression molding machine according to the embodiment of the invention, including a sectional view taken along line X2-X2, of the spray device.

### Description of the preferred embodiment

Embodiments of the invention will now be described with reference to the drawings. A compression molding machine according to the embodiment relates to a single stroke compression molding machine configured to produce a compression molded product such as an orally disintegrating tablet or a double layer tablet. When the compression molded product is a pharmaceutical tablet, the tablet is made of a powdery material containing an active ingredient or a powdery material containing an active ingredient and an excipient. According to the embodiment of the invention, an external lubricant spray device is adopted as a spray device and an external lubricant is adopted as a lubricant.

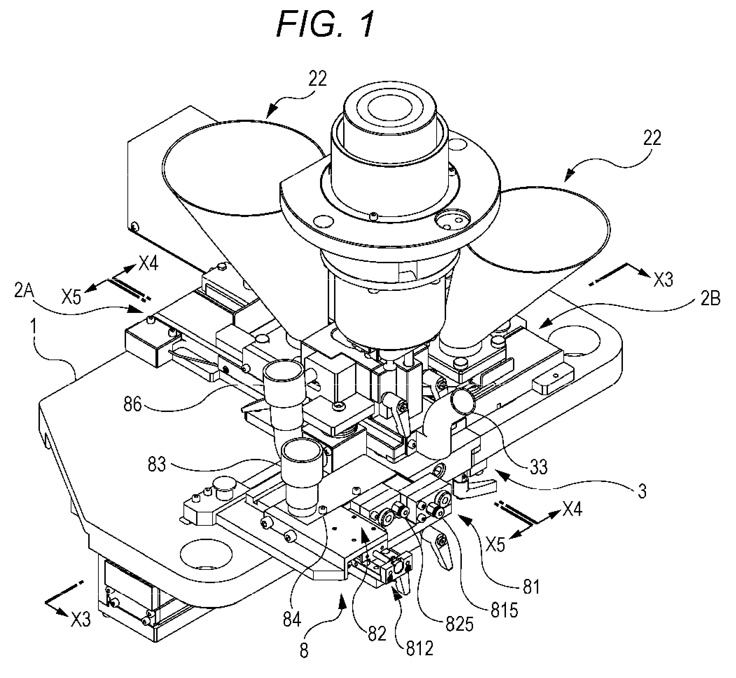

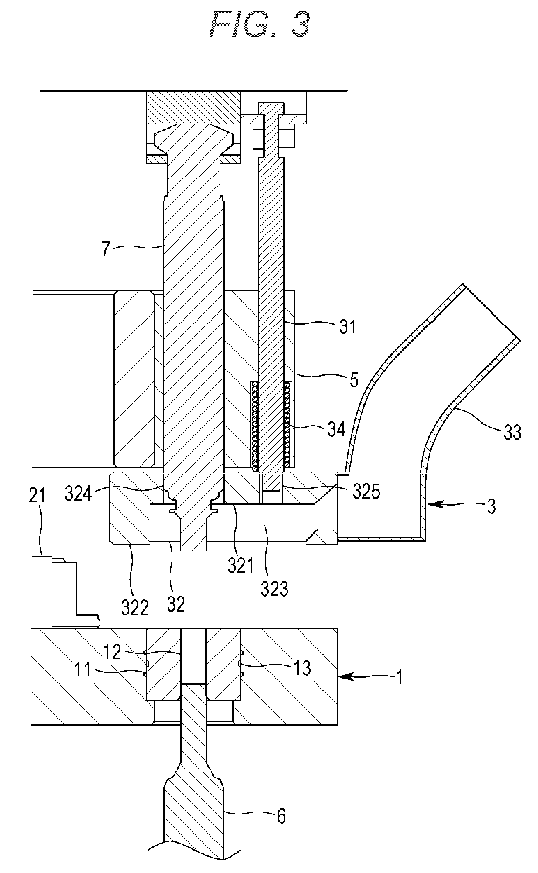

As shown in Figs. 1 to 5, the compression molding machine according to the embodiment (hereinafter, referred to as a molding machine) principally includes a die table 1 having a die bore 12 to be filled with a powdery material, a lower punch 6 located below the die bore 12 and configured to compress the powdery material filled in the die bore 12, an upper punch 7 located above the die bore 12 so as to face the lower punch 6 and configured to compress the powdery material filled in the die bore 12 along with the lower punch 6, feeders 2A and 2B each configured to fill the die bore 12 with a powdery material, a dust collector 3 configured to collect dust on the upper surface of the die table 1, and an external lubricant spray device configured to spray an external lubricant to the upper punch 7, the lower punch 6, and the interior of the die bore 12.

Examples of the feeders 2A and 2B include a feed shoe. There are provided two feeders (2A and 2B) in the embodiment, but there can be provided only one feeder.

The die table 1 is provided with a die installation portion 13 into which a die 11 is mounted. The die 11 has the die bore 12 penetrating vertically, and conforms to the TSM Standards or the EU Standards. This die 11 is applicable to an ordinary rotary compression molding machine. The die table 1 can be directly provided with the die bore 12 penetrating vertically, instead of having the die 11.

The lower punch 6 is retained at a lower punch retaining portion 4 such that the upper end (punch tip) thereof is inserted to the die bore 12 and is slidable relatively to the die bore 12. The upper end of the lower punch 6 is constantly inserted to the die bore 12. The lower punch 6 is moved upward and downward by a drive source such as a servo motor (not shown).

The upper punch 7 is retained at an upper punch retaining portion 5 such that the lower end (punch tip) thereof is inserted to the die bore 12 and is slidable relatively to the die bore 12. The lower end of the upper punch 7 enters and exits the die bore 12. Similarly to the lower punch 6, the upper punch 7 is moved upward and downward by a drive source such as a servo motor (not shown).

Like the die 11, the lower punch 6 and the upper punch 7 each conform to the TSM Standards or the EU Standards. The lower punch 6 and the upper punch 7 are applicable to a rotary compression molding machine.

The feeders 2A and 2B each include a conveyance member 21 configured to slide relatively to the upper surface of the die table 1 and convey a powdery material to the die bore 12, and a hopper 22 configured to supply the conveyance member 21 with a powdery material. The conveyance member 21 is a plate having a space 211 that has an internal diameter larger than that of the die bore 12 and penetrates vertically.

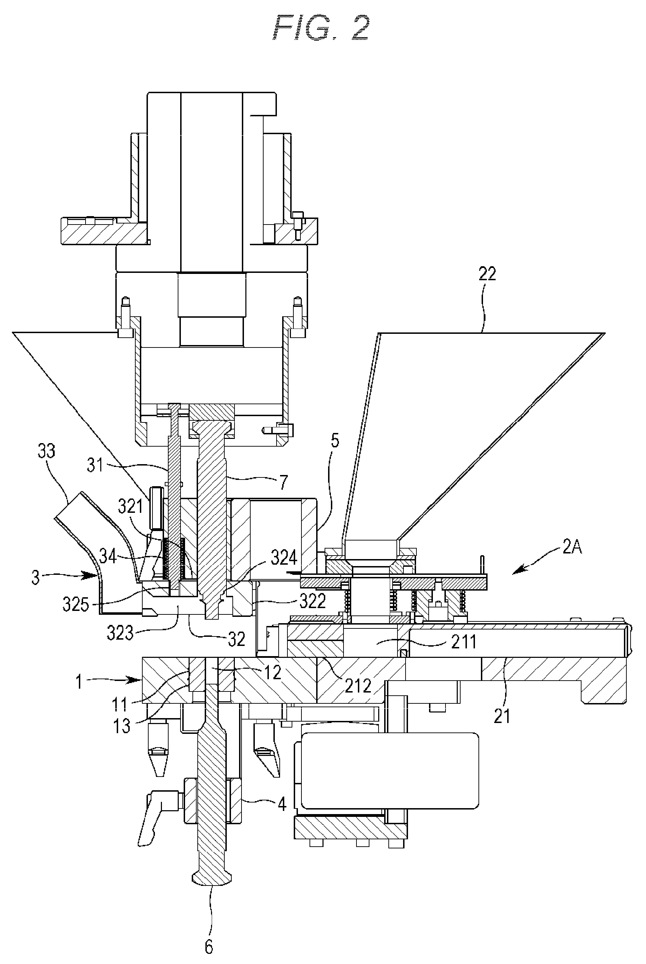

The conveyance member 21 is reciprocated between a filling position indicated in Fig. 4 and a retreating position indicated in Figs. 2, 3, and 5 by a drive source such as a servo motor (not shown) while storing a powdery material in the space 211. The conveyance member 21 located at the filling position covers a region around the die bore 12 on the upper surface of the die table 1. The space 211 is located vertically above the die bore 12 and the die bore 12 is filled with the powdery material in the space 211.

The conveyance member 21 located at the retreating position retreats from the region around the die bore 12 on the upper surface of the die table 1 and releases the region. The space 211 is located vertically below a supply port of the hopper 22, and is supplied with the powdery material in the hopper 22.

The distal end (closer to the die bore 12) of the conveyance member 21 has a lower surface serving as a leveling plate 212. After a powdery material is transferred from the space 211 to the die bore 12, the leveling plate 212 levels a powdery material overflown from the die bore 12 due to upward movement of the lower punch 6 and removes the excessive powdery material on the die bore 12.

The hopper 22 has the upper portion expanding upward like a funnel. An operator of this molding machine supplies a powdery material to the hopper 22 so as to be filled in the die bore 12.

As shown in Fig. 1, the embodiment provides two feeders 2A and 2B that move toward and away from the die bore 12 in two different directions when viewed from the die bore 12 and fill the die bore 12 with a powdery material. The feeders 2A and 2B are in common in terms of the structure and the mechanism as described above. The hoppers 22 in the feeders 2A and 2B can be fed with different types of powdery materials or a same powdery material.

As shown in Fig. 2 to 5, the dust collector 3 includes a driver 31 configured to move upward and downward along with the upper punch 7, a dust collecting case 32 configured to move upward and downward along with the upper punch 7 by means of the driver 31 to cover the region around the die bore 12 on the upper surface of the die table 1, and a suction duct 33 connected to the dust collecting case 32 and configured to decompress the dust collecting case 32.

The driver 31 according to the embodiment has a vertically extending shaft shape in parallel with the upper punch 7, and is retained at the retaining portion 5 that also retains the upper punch 7. The upper end of the driver 31 is coupled to the drive source such as a servo motor as the upper end of the upper punch 7 is, and moves upward and downward along with the upper punch 7. Unlike the upper punch 7, the driver 31 can be displaced within a certain range in the vertical direction relatively to the drive source.

The dust collecting case 32 has an upper wall 321 and side walls 322 extending vertically downward from the peripheral edges of the upper wall 321 so as to surround an internal space 323. The dust collecting case 32 has a box shape with an open bottom face. The upper wall 321 has a portion located vertically above the die bore 12 and provided with a punch insertion bore 324 that penetrates vertically and allows the upper punch 7 to be inserted therethrough. The upper wall 321 also has a portion located vertically below the driver 31 and provided with an engagement bore 325 that is engaged with the lower end of the driver 31.

The upper surface of the upper wall 321 of the dust collecting case 32 vertically faces the lower surface of the upper punch retaining portion 5. A biasing member 34 exerting elastic bias force is provided between the dust collecting case 32 and the upper punch retaining portion 5. The biasing member 34 presses the dust collecting case 32 so as to come into close contact with the upper surface of the die table 1 during dust collection. Examples of the biasing member 34 include a compression coil spring 34 that is elastically deformable.

The dust collecting case 32 reciprocates between a dust collecting position indicated in Fig. 5 and a releasing position indicated in Figs. 2 to 4. When the dust collecting case 32 is located at the dust collecting position, the upper wall 321 and the side walls 322 of the dust collecting case 32 surround the region around the die bore 12 on the upper surface of the die table 1 to isolate this region from the remaining region. When the lower end of the upper punch 7 is inserted to the die bore 12 to compress the powdery material in the die bore 12, the driver 31 is displaced upward relatively to the drive source and the upper punch 7 in accordance with the amount of vertical displacement of the upper punch 7 relative to the die table 1 and the die bore 12. In this state, the compression coil spring 34 located between the lower surface of the upper punch retaining portion 5 and the upper surface of the dust collecting case 32 expands appropriately to press the dust collecting case 32 against the upper surface of the die table 1 without applying unreasonable force to the dust collecting case 32.

The dust collecting case 32 located at the releasing position releases the region around the die bore 12 on the upper surface of the die table 1. The compression coil spring 34 is compressed because of a reduced distance between the lower surface of the upper punch retaining portion 5 and the upper surface of the dust collecting case 32.

The suction duct 33 is provided continuously from the proximal end of the dust collecting case 32. The interior of the suction duct 33 communicates with the internal space 323 of the dust collecting case 32. The suction duct 33 is connected to an ejector (a fluid pump; not shown) configured to generate suction force. The ejector decompresses the suction duct 33 and the internal space 323 of the dust collecting case 32 with its suction force, so as to suck and remove dust and dirt such as a powdery material on the die table 1 facing the internal space 323 of the dust collecting case 32. Generation timing and degree of the suction force of the ejector can be controlled by operating a solenoid valve (not shown) that is located on a flow path between the dust collecting case 32 and the ejector.

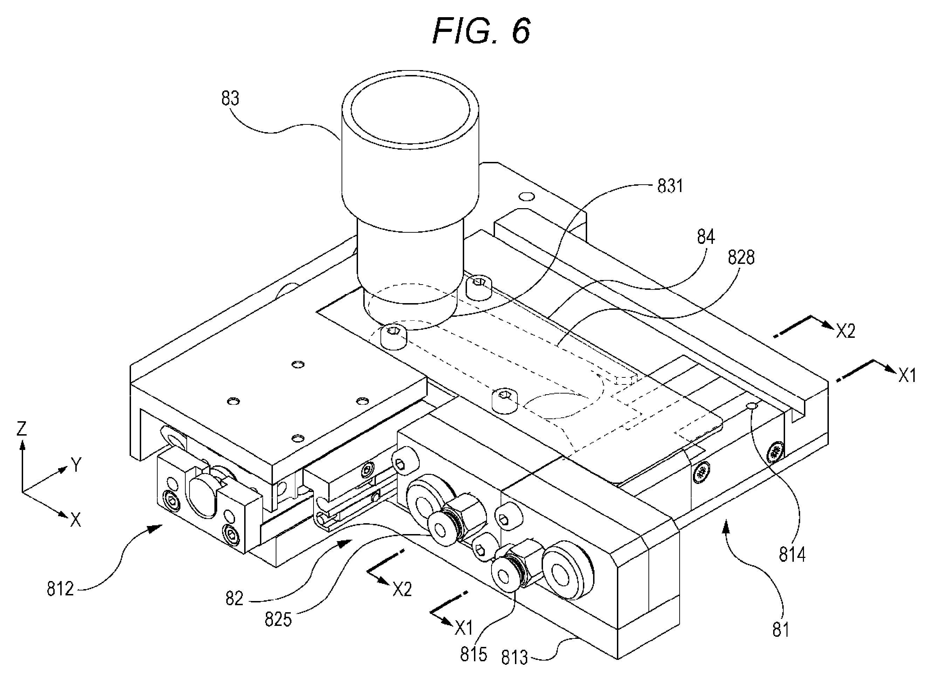

As shown in Figs. 1 and 6, an external lubricant spray device 8 serving as a spray device includes an upper punch spray portion 81 configured to spray an external lubricant to the lower end surface of the upper punch 7, a cylinder 812 serving as an upper punch spray portion drive unit configured to drive the upper punch spray portion 81, a lower punch spray portion 82 configured to spray an external lubricant to the upper end surface of the lower punch 6 and the interior of the die bore 12, a first suction duct 83 configured to suck an excessive external lubricant, a guide member 84 configured to guide an external lubricant to a first suction port 831, and a second suction duct 86 configured to suck an excessive external lubricant.

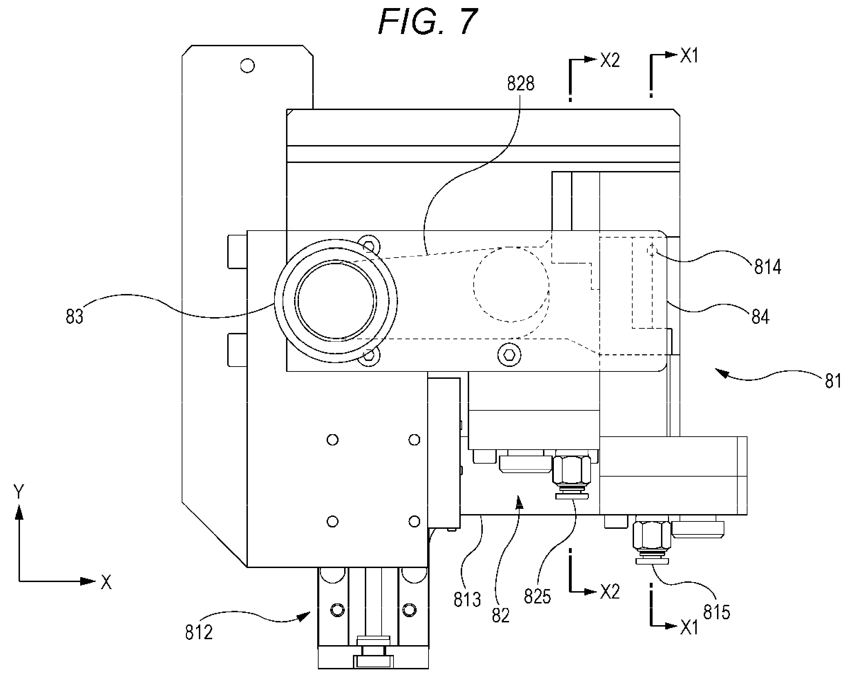

The external lubricant spray device 8 reciprocates among a retreating position, an upper punch spray position, and a lower punch spray position on the die table 1 in an X axis direction indicated in Figs. 6 and 7. An external lubricant is sprayed to the lower end surface of the upper punch 7 when the external lubricant spray device 8 is located at the upper punch spray position whereas an external lubricant is sprayed to the upper end surface of the lower punch 6 and the interior of the die bore 12 when the external lubricant spray device 8 is located at the lower punch spray position. An external lubricant is constantly sprayed in the embodiment. The external lubricant is electrically charged when the external lubricant spray device 8 is located at the upper punch spray position or the lower punch spray position. The external lubricant is not electrically charged otherwise and is sucked to the first or second suction duct 83 or 86. This configuration is applicable to a spray agent other than an external lubricant.

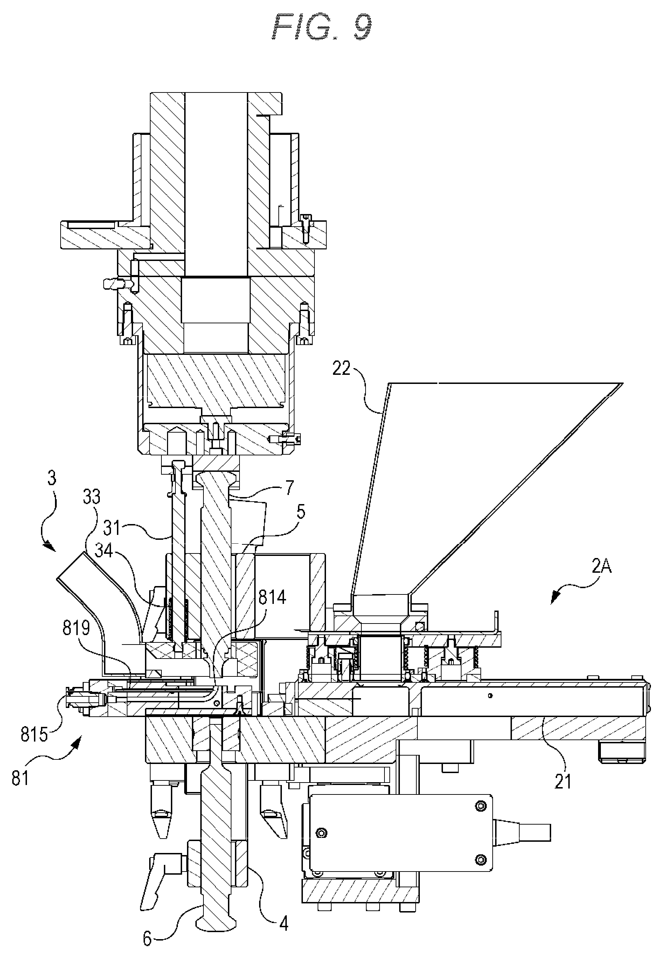

As shown in Fig. 9, the upper punch spray portion 81 includes an upper punch spray portion main body 816, an upper punch spray nozzle 814 opened to the upper surface of the upper punch spray portion main body 816, and a charging member 819 having a distal end projecting to a path for an external lubricant.

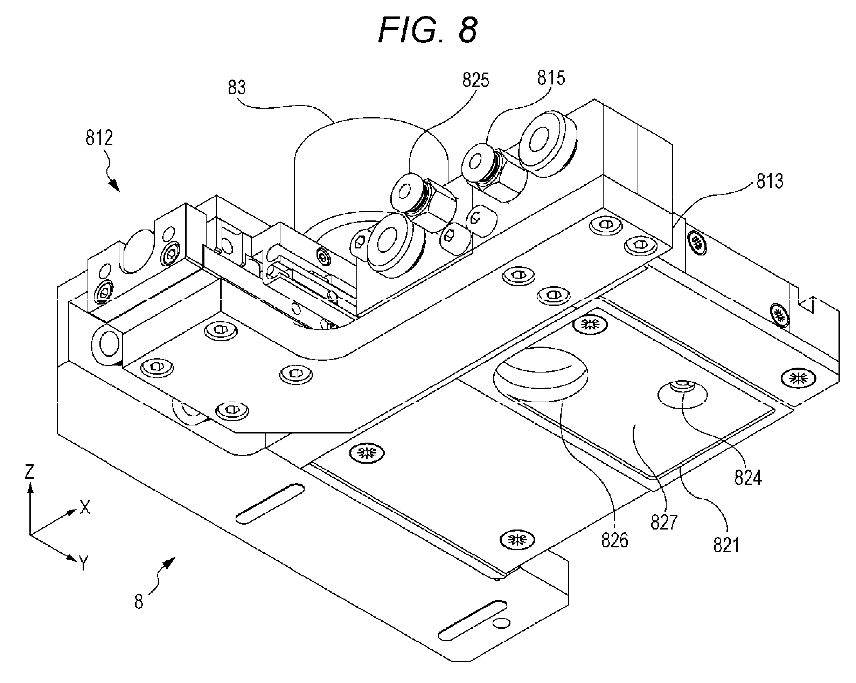

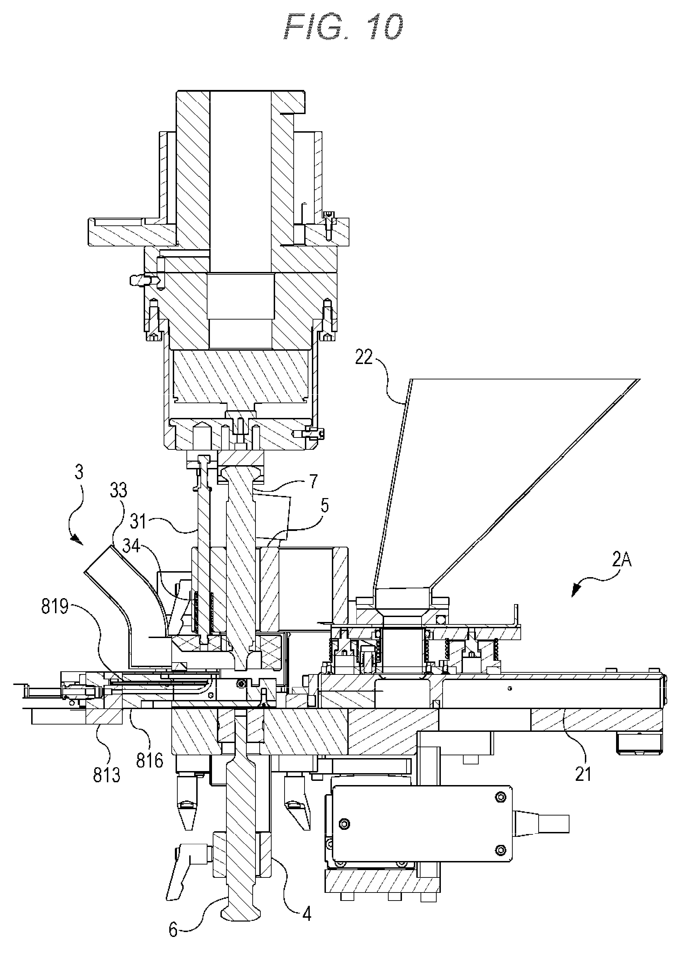

The upper punch spray portion 81 has a bottom surface coupled to a first end of a coupling member 813. The coupling member 813 has a second end coupled to the lower surface of the cylinder 812. When the cylinder 812 reciprocates on the die table 1 in a Y axis direction, the upper punch spray portion 81 also reciprocates in the Y axis direction (the X axis direction, the Y axis direction, and a Z axis direction are indicated in Figs. 1, 6, 7, and 8). When the upper punch spray portion 81 reciprocates in the Y axis direction, the upper punch spray nozzle 814 reciprocates between a predetermined position (Fig. 9) where an external lubricant can be sprayed to the lower end surface of the upper punch 7 and a retreating position (Fig. 10) below the guide member 84. Figs. 9 and 10 show the state where the external lubricant spray device 8 is located at the upper punch spray position.

An external lubricant is injected to the upper punch spray portion 81 through a tube (not shown) connected to a supply port 815, and is sprayed from the upper punch spray nozzle 814. An external lubricant is constantly sprayed in the embodiment and is electrically charged when sprayed to the lower end surface of the upper punch 7.

When the upper punch spray portion 81 is located at the predetermined position where an external lubricant can be sprayed to the lower end surface of the upper punch 7 and the external lubricant spray device 8 is located at the upper punch spray position, an external lubricant is sprayed to the lower end surface of the upper punch 7. When the upper punch spray portion 81 is located at the retreating position, an external lubricant is sprayed to the lower surface of the guide member 84 and is sucked to the first suction duct 83.

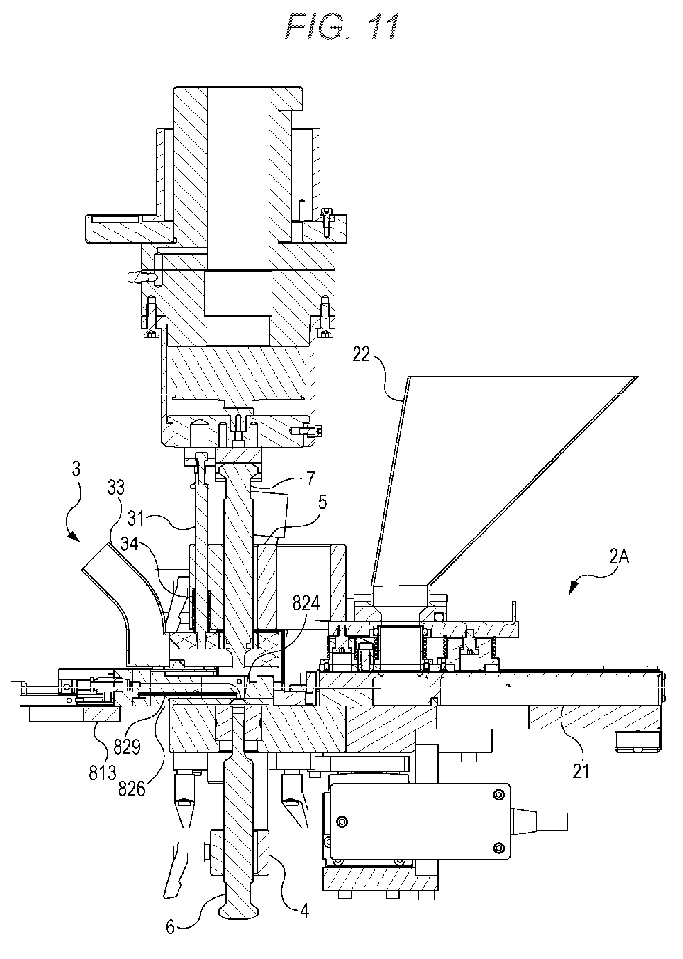

As shown in Fig. 11, the lower punch spray portion 82 includes a lower punch spray portion main body 82 6, a lower punch spray nozzle 824 opened to the bottom surface of the lower punch spray portion main body 826, and a charging member 829 having a distal end projecting to a path for an external lubricant.

The lower punch spray portion 82 is covered, around the lower punch spray nozzle 824 located at the bottom surface, with a projecting portion 821 in contact with the die table 1, and has a space 827 (suction space) used for suction of an external lubricant sprayed onto the die table 1. The space 827 is connected to a suction bore 826 that vertically penetrates the lower punch spray portion 82, and the suction bore 826 is connected, adjacent to the upper surface of the lower punch spray portion 82, to a suction path 828. The guide member 84 to be described later is located above the suction path 828.

An external lubricant is injected to the lower punch spray portion 82 through a tube (not shown) connected to a supply port 825, and is sprayed from the lower punch spray nozzle 824. An external lubricant is constantly sprayed in the embodiment and is electrically charged when sprayed to the upper end surface of the lower punch 6 and the interior of the die bore 12. An external lubricant is sprayed from the lower punch spray nozzle 824 to the upper end surface of the lower punch 6 and the interior of the die bore 12 when the external lubricant spray device 8 is located at the lower punch spray position. In contrast, an external lubricant is sprayed onto the die table 1 when the external lubricant spray device 8 is located at a position other than the lower punch spray position. The external lubricant sprayed onto the die table 1 is sucked in the space 827, moves upward through the suction bore 826, and moves by way of the suction path 828 so as to be sucked to the first suction duct 83.

The guide member 84 is located adjacent to the first suction duct 83 and partially configures the upper surface of the external lubricant spray device 8. The guide member 84 has a box shape with an open lower surface, covers from above part of the upper punch spray portion 81, the suction bore 826, and the suction path 828, and is partially connected to the first suction port 831 at the distal end of the first suction duct 83.

The charging member 819 is configured to charge an external lubricant sprayed to the lower end surface of the upper punch 7. The distal end of the charging member 819 is located adjacent to the upper punch spray nozzle 814 and charges an external lubricant sprayed from the upper punch spray nozzle 814. The charging member 829 is configured to charge an external lubricant sprayed to the upper end surface of the lower punch 6 and the interior of the die bore 12. The distal end of the charging member 829 is located adjacent to the lower punch spray nozzle 824 and charges an external lubricant sprayed from the lower punch spray nozzle 824.

An external lubricant can be charged constantly or only in a case where the external lubricant is sprayed to the lower end surface of the upper punch 7, the upper end surface of the lower punch 6, and the interior of the die bore 12. In order to charge an external lubricant only in a case where the external lubricant is sprayed to the lower end surface of the upper punch 7, the upper end surface of the lower punch 6, and the interior of the die bore 12, the external lubricant can be charged only at predetermined timing by a pulse or the like. The embodiment adopts this method to charge an external lubricant only in a case where the external lubricant is sprayed to the upper end surface of the lower punch 6 and the interior of the die bore 12.

The first suction duct 83 is provided at the distal end with the first suction port 831 and is connected to the guide member 84. The first suction duct 83 sucks an external lubricant excessively sprayed from the lower punch spray nozzle 824 onto the die table 1 and an external lubricant sprayed from the upper punch spray nozzle 814 to the lower surface of the guide member 84.

The second suction duct 86 is provided at the distal end with a second suction port (not shown). When the upper punch spray portion 81 is located at the predetermined position where an external lubricant can be sprayed to the lower end surface of the upper punch 7 and the external lubricant spray device 8 is located at the retreating position, the second suction duct 86 sucks an external lubricant sprayed from the upper punch spray nozzle 814.

The external lubricant spray device 8 will now be described in terms of a series of its operation. Initially, as shown in Fig. 1, the external lubricant spray device 8 is located at the retreating position and the upper punch spray portion 81 is also located at the retreating position. In this state, an external lubricant is sprayed from the upper punch spray nozzle 814 to the lower surface of the guide member 84 and is sucked through the first suction duct 83. Meanwhile, an external lubricant is sprayed from the lower punch spray nozzle 824 onto the die table 1 and is sucked through the first suction duct 83 by way of the suction bore 826.

Subsequently, in a state where the external lubricant spray device 8 is located at the retreating position, the upper punch spray portion 81 moves from the retreating position to the predetermined position where an external lubricant can be sprayed to the lower end surface of the upper punch 7. In this state, an external lubricant sprayed from the upper punch spray nozzle 814 is sucked through the second suction duct 86 opened above the upper punch spray nozzle 814. Meanwhile, an external lubricant is sprayed from the lower punch spray nozzle 824 onto the die table 1 and is sucked through the first suction duct 83 by way of the suction bore 826.

The external lubricant spray device 8 subsequently moves from the retreating position to the upper punch spray position. The upper punch spray portion 81 stays at the predetermined position where an external lubricant can be sprayed to the lower end surface of the upper punch 7. An external lubricant is sprayed from the upper punch spray nozzle 814 to the lower end surface of the upper punch. Meanwhile, an external lubricant is sprayed from the lower punch spray nozzle 824 onto the die table 1 and is sucked through the first suction duct 83 by way of the suction bore 826.

The external lubricant spray device 8 subsequently moves from the upper punch spray position to the lower punch spray position and an external lubricant is sprayed from the lower punch spray nozzle 824 to the upper end surface of the lower punch 6 and the interior of the die bore 12. Meanwhile, the upper punch spray portion 81 moves from the predetermined position to the retreating position. An external lubricant is sprayed from the upper punch spray nozzle 814 to the lower surface of the guide member 84 and is sucked through the first suction duct 83.

The external lubricant spray device 8 subsequently moves from the lower punch spray position to the retreating position. The upper punch spray portion 81 stays at the retreating position. In this state, an external lubricant is sprayed from the upper punch spray nozzle 814 to the lower surface of the guide member 84 and is sucked through the first suction duct 83. Meanwhile, an external lubricant is sprayed from the lower punch spray nozzle 824 onto the die table 1 and is sucked through the first suction duct 83 by way of the suction bore 826. The upper punch spray portion 81 is located at the retreating position when the external lubricant spray device 8 moves to the retreating position. Accordingly, the upper punch spray nozzle 814 does not spray any excessive external lubricant to the lower end surface of the upper punch 7.

Such a series of operation is performed repeatedly. The external lubricant spray device 8 in the embodiment moves from the retreating position to the upper punch spray position and then moves to the lower punch spray position. The external lubricant spray device 8 can alternatively move to the lower punch spray position before moving to the upper punch spray position. The order is not particularly limited.

A method of producing an orally disintegrating tablet using the molding machine according to the embodiment will now be described in terms of its specific procedure. At an initial stage of production of a molded product, the external lubricant spray device 8 and the conveyance member 21 of the feeder 2A (or 2B) are located at the retreating positions, respectively. This method requires only one of the feeders (2A and 2B), and will be described below in the case where the feeder 2A is provided. Neither the upper punch 7 nor the driver 31 descends, and the lower end of the upper punch 7 is not inserted to the die bore 12. The dust collecting case 32 is located at the releasing position.

Initially, the external lubricant spray device 8 moves from the retreating position to the upper punch spray position and an external lubricant is sprayed from the upper punch spray nozzle 814 to the lower end surface of the upper punch. The upper punch spray portion 81 is subsequently moved to the retreating position. The external lubricant spray device 8 then moves from the upper punch spray position to the lower punch spray position and an external lubricant is sprayed from the lower punch spray nozzle 824 to the upper end surface of the lower punch and the interior of the die bore 12. The external lubricant spray device 8 then moves from the lower punch spray position to the retreating position.

The feeder 2A subsequently moves from the retreating position to the filling position and fills the die bore 12 with a powdery material. The lower punch 6 ascends to achieve a required amount of the powdery material, the leveling plate 212 at the lower surface of the conveyance member 21 levels and removes a powdery material overflown from the upper edge of the die bore 12. The feeder 2A then moves to the retreating position.

The upper punch 7 subsequently descends and the lower end thereof is inserted to the die bore 12. The lower end of the upper punch 7 and the upper end of the lower punch 6 preliminarily compress the powdery material in the die bore 12, and then mainly compress the same. The procedure may not optionally include the preliminarily compressing step.

The driver 31, the dust collecting case 32 engaged with the driver 31, and the suction duct 33 connected to the dust collecting case 32 descend along with the descending upper punch 7, and the dust collecting case 32 moves to the dust collecting position. The lower end surfaces of the side walls 322 of the dust collecting case 32 located at the dust collecting position are in close contact with the upper surface of the die table 1. In this state, the ejector generates suction force to decompress the internal space 323 of the dust collecting case 32, so as to suck dust and dirt including a powdery material remaining in the region around the die bore 12 on the upper surface of the die table 1. The lower end of the upper punch is inserted to the die bore 12 during this dust collecting step.

The upper punch 7, the driver 31, the dust collecting case 32, and the suction duct 33 subsequently ascend, and the suction duct 33 moves to the releasing position.

The lower punch 6 is then ascended and the upper end thereof pushes a compression molded product out of the die bore 12 onto the die table 1. The feeder 2A discharges the compression molded product.

A method of producing a double layer tablet using the molding machine according to the embodiment as well as the external lubricant spray device 8 will now be described in terms of its specific procedure. The processes similar to those in the above method of producing an orally disintegrating tablet will not be described repeatedly. Similarly to the above method, at an initial stage of production of a molded product, the conveyance members 21 of the feeders 2A and 2B are at the retreating positions, respectively. Neither the upper punch 7 nor the driver 31 descends, and the lower end of the upper punch 7 is not inserted to the die bore 12. The dust collecting case 32 is located at the releasing position.

The external lubricant spray device 8 initially moves from the retreating position to the upper punch spray position and to the lower punch spray position to spray an external lubricant to the lower end surface of the upper punch 7 as well as to the upper end surface of the lower punch 6 and the interior of the die bore 12. This process is similar to that in the above method of producing an orally disintegrating tablet.

The conveyance member 21 of the feeder 2A subsequently proceeds from the retreating position to the filling position and fills the die bore 12 with the powdery material of the feeder 2A. When the conveyance member 21 of the feeder 2A then moves from the filling position to the retreating position, the leveling plate 212 at the lower surface of the conveyance member 21 levels and removes a powdery material overflown from the upper edge of the die bore 12.

The upper punch 7 subsequently descends and the lower end thereof is inserted to the die bore 12. The lower end of the upper punch 7 and the upper end of the lower punch 6 compress the powdery material in the die bore 12 (preliminary compression). A first layer (lower layer) of the double layer tablet is thus molded.

The driver 31, the dust collecting case 32 engaged with the driver 31, and the suction duct 33 connected to the dust collecting case 32 descend along with the descending upper punch 7, and the dust collecting case 32 moves to the dust collecting position. The lower end surfaces of the side walls 322 of the dust collecting case 32 located at the dust collecting position are in close contact with the upper surface of the die table 1. In this state, the ejector generates suction force to decompress the internal space 323 of the dust collecting case 32, so as to suck dust and dirt including a powdery material remaining in the region around the die bore 12 on the upper surface of the die table 1.

The upper punch 7, the driver 31, the dust collecting case 32, and the suction duct 33 subsequently ascend. The lower end of the upper punch 7 is extracted from the die bore 12 and the suction duct 33 moves to the releasing position.

The conveyance member 21 of the feeder 2B subsequently moves from the retreating position to the filling position and fills the die bore 12 with the powdery material of the feeder 2B.

When the conveyance member 21 then moves from the filling position to the retreating position, the leveling plate 212 at the lower surface of the conveyance member 21 levels and removes a powdery material overflown from the upper edge of the die bore 12.

The upper punch 7 subsequently descends and the lower end thereof is inserted to the die bore 12. The lower end of the upper punch 7 and the upper end of the lower punch 6 compress the powdery material in the die bore 12 (main compression, or preliminary compression and main compression). A second layer (upper layer) of the double layer tablet is thus molded to complete the double layer tablet.

The driver 31, the dust collecting case 32, and the suction duct 33 descend along with the descending upper punch 7, and the dust collecting case 32 is located at the dust collecting position. The lower end surfaces of the side walls 322 of the dust collecting case 32 located at the dust collecting position are in close contact with the upper surface of the die table 1. In this state, the ejector generates suction force to decompress the internal space 323 of the dust collecting case 32, so as to suck dust and dirt including a powdery material remaining in the region around the die bore 12 on the upper surface of the die table 1.

The upper punch 7, the driver 31, the dust collecting case 32, and the suction duct 33 subsequently ascend. The lower end of the upper punch 7 is extracted from the die bore 12 and the suction duct 33 moves to the releasing position.

The lower punch 6 is then ascended and the upper end thereof pushes a compression molded product out of the die bore 12 onto the die table 1. The feeder 2A (or 2B) discharges the compression molded product.

After the first layer is molded and before the die bore 12 is filled with a powdery material to configure the second layer, the external lubricant spray device 8 can optionally spray an external lubricant to the lower end surface of the upper punch 7 as well as to the upper end surface of the lower punch 6 and the interior of the die bore 12. Still optionally, a spray device configured to spray a partitioning agent partitioning between the first layer and the second layer, a binding agent binding these layers, or a dividing agent dividable between these layers can be included separately to spray such an agent to the interface between the first layer and the second layer.

The invention is not limited to the embodiments described above. The dust collecting case 32 is moved vertically in the above embodiment. The dust collecting case 32 can alternatively slide along the upper surface of the die table 1 similarly to the conveyance members 21 of the feeders 2A and 2B.

The compression molding machine according to the above embodiment can be modified to produce a dry-coated tablet by replacing any one of the feeders 2A and 2B with a core supplier configured to supply the die bore 12 with a core (an internal core or a core tablet) to be buried in the dry-coated tablet.

Specific configurations of the other portions can be modified in various manners within the scope not departing from the purposes of the invention. The spray device according to the invention is applicable to a single stroke compression molding machine as well as to a rotary compression molding machine.
The invention provides a spray device including an upper punch spray nozzle (814) configured to spray a spray agent to a lower end surface of an upper punch, a lower punch spray nozzle (824) configured to spray a spray agent to an upper end surface of a lower punch and an inner peripheral surface of a die bore, a first suction port (831) configured to suck the sprayed spray agent, and a guide member (84) configured to guide the spray agent sprayed from the upper punch spray nozzle (814) to the first suction port (831), and the guide member (84) is configured to be located above the upper punch spray nozzle (814).

## Claims

1. A spray device applicable to a compression molding machine including a die table having a vertically penetrating die bore, a lower punch having an upper end that is configured to be inserted in the die bore and to be slidable therein, and an upper punch having a lower end that is configured to be inserted in the die bore and to be slidable therein, the spray device being configured to reciprocate on the die table and comprising:
an upper punch spray nozzle (814) configured to spray a spray agent to a lower end surface of the upper punch;
a lower punch spray nozzle (824) configured to spray a spray agent to an upper end surface of the lower punch and an inner peripheral surface of the die bore;
a first suction port (831) configured to suck the sprayed spray agent; and
a guide member (84) configured to guide the spray agent sprayed from the upper punch spray nozzle to the suction port; wherein
the guide member is configured to be located above the upper punch spray nozzle.

2. The spray device according to claim 1, wherein the upper punch spray nozzle reciprocates relatively to the guide member.

3. The spray device according to claim 1 or 2, wherein the upper punch spray nozzle reciprocates between a predetermined position below the upper punch and a retreating position below the guide member.

4. The spray device according to any one of claims 1 to 3, wherein the spray device has, at a bottom surface, a suction space (827) used for suction of a spray agent sprayed from the lower punch spray nozzle onto the die table.

5. The spray device according to any one of claims 1 to 4, wherein the spray agent is an external lubricant.

6. A compression molding machine comprising a die table (1) having a vertically penetrating die bore (12); a lower punch (6) having an upper end that is configured to be inserted in the die bore and to be slidable therein, and an upper punch (7) having a lower end that is configured to be inserted in the die bore and to be slidable therein; wherein the compression molding machine further comprises the spray device according to any one of claims 1 to 5.
